# EUROPÄISCHE PATENTSCHRIFT

(11) **EP 0 647 998 B1**
(45) Veröffentlichungstag und Bekanntmachung des Hinweises auf die Patenterteilung: **14.05.1997**
(21) Anmeldenummer: 94250206.3
(22) Anmeldetag: 22.08.1994
(51) Int. Cl.: H02B 1/56

(54) **Schaltfeld mit Kühlkanal zwischen Hauptstromkreisen und Hilfsstromkreisen**
Switchboard with cooling channel between main circuits and auxiliary circuits
Tableau de distribution avec un canal de refroidissement entre les circuits principaux et les circuits auxiliaires

(30) Priorität: 03.09.1993 DE 4330509
(43) Veröffentlichungstag der Anmeldung: 12.04.1995
(73) Patentinhaber: SIEMENS AKTIENGESELLSCHAFT, 80333 München (DE)
(72) Erfinder: Ganser, Bodo Dipl.-Ing., D-63517 Rodenbach (DE); Decker, Markus, D-65451 Kelsterbach (DE)

(56) Entgegenhaltungen:
- WO-A-91/06995
- DE-B- 1 062 307
- DE-U- 8 915 141
- FR-A- 2 610 471
- PATENT ABSTRACTS OF JAPAN, vol. 3, no. 98 (E-131), 18. August 1979 & JP-A-54 076 939 (TOSHIBA CORP.), 20. Juni 1979
- BBC NACNRICHTEN, Bd.66, Nr.7, 1984, MANNHEIM, Seiten 243 - 249; HANS DEDERICHS 'Kompaktschalthäuser für Antriebsspeisungen und Anlagen-Leitsystem in Walzwerken'

## Beschreibung

Die Erfindung betrifft ein Schaltfeld einer Schaltanlage mit wenigstens einer ersten Geräteeinheit für Hauptstromkreise und mit wenigstens einer weiteren Geräteeinheit für Hilfsstromkreise, wobei die weitere Geräteeinheit durch Wände gegenüber der ersten Geräteeinheit abgetrennt ist.

Schaltfelder dieser Art sind bei Schaltanlagen für unterschiedliche Einsatzgebiete bekannt, insbesondere für Niederspannungs-Schaltanlagen und Mittelspannungs-Schaltanlagen. Beispielsweise zeigt die DE-Firmendruckschrift Siemens: "Niederspannungs-Schaltanlage 8PU. 003", Best.-Nr. A19100-E74-A92, Seiten 4 und 5 ein Schaltfeld einer Niederspannungs-Schaltanlage mit einem Leistungsschalter als Geräteeinheit für Hauptstromkreise und einem darüber befindlichen Raum, der zur Aufnahme einer Geräteeinheit für Hilfsstromkreise dient. Zu dieser gehören insbesondere Steuer- und Anzeigegeräte sowie Klemmleisten. Von den rückseitig der Geräteeinheit für Hilfsstromkreise angeordneten Sammelschienen und dem Leistungsschalter wird eine beträchtliche Wärmemenge abgegeben, welche die Hilfsstrom-Geräteeinheit beaufschlagt und deren Funktionen stören kann, insbesondere wenn darin elektronische Komponenten enthalten sind.

Sinngemäße Verhältnisse bestehen bei einer Mittelspannungs-Schaltanlage, wie sie der DE-B-1 790 184 zu entnehmen ist. Auch hier besteht somit das Problem, daß die Geräteeinheit für Hilfsstromkreise einer erheblichen Wärmeeinwirkung ausgesetzt sein kann.

Der Erfindung liegt ausgehend von einem Schaltfeld der eingangs genannten Art die Aufgabe zugrunde, die Geräteeinheit für Hilfsstromkreise vor einer zu starken und daher ihre Funktion beeinträchtigenden Erwärmung zu schützen.

Die Aufgabe wird gemäß der Erfindung dadurch gelöst, daß im Abstand zu den abtrennenden Wänden jeweils eine zusätzliche Wand zur Bildung eines Luftkanals angeordnet ist. Da nunmehr zwei Wände im Abstand voneinander vorhanden sind, kann Wärmestrahlung weniger direkt auf die Hilfsstromgeräte einwirken. Auch kann sich durch den Luftkanal eine natürliche Luftströmung ausbilden, die eine übermäßige Erwärmung der Hilfsstromgeräte verhindert. Bei geeigneter Dimensionierung des Luftkanals ist es daher möglich, bei allen Betriebsbedingungen der Schaltalage für eine der Hilfsstrom-Geräteeinheit zuträgliche Betriebstemperatur zu sorgen.

Die angestrebte Kühlwirkung kann dadurch begünstigt werden, daß die zusätzlichen Wände etwa die Fläche der abtrennenden Wände aufweisen und daß der Luftkanal etwa die Breite des Schaltfeldes besitzt. Ausgehend von dieser Bemessung kann die Kühlwirkung durch den Abstand der Wände beeinflußt werden.

Der Luftkanal kann durch relativ einfach geformte Teile gebildet werden. Insbesondere bei einer Anordnung der ersten Geräteeinheit unterhalb der zweiten Geräteeinheit kann der Luftkanal etwa winkelförmig die Unterseite und die Rückseite der zweiten Geräteeinheit abschirmend ausgebildet sein.

Um eine vollständige Durchströmung des Luftkanals und damit eine möglichst wirksame Kühlung zu erreichen, kann der Luftkanal eine erste, an der Oberseite des Schaltfeldes gelegene Mündung und eine weitere, an der Frontseite des Schaltfeldes gelegene Mündung besitzen.

Wie bereits erwähnt, ist es bei geeigneter Dimensionierung des Luftkanals möglich, allein durch natürlichen Auftrieb erwärmter Luft für eine ausreichende Kühlwirkung zu sorgen. Es gibt jedoch Schaltanlagen, bei denen die spezifische Belastung so groß und/oder der für den Luftkanal zur Verfügung stehende Raum derart beschränkt ist, daß durch natürlichen Auftrieb keine ausreichende Kühlung zu erreichen ist. Für diese Fälle eignet sich eine Ausführungsform der Erfindung, bei der im Bereich der ersten, d. h. an der Oberseite des Schaltfeldes befindlichen Mündung ein Lüfter angeordnet ist, der Kühlluft in Richtung der zweiten, d. h. an der Frontseite des Schaltfeldes befindlichen Mündung fördert. Diese Strömungsrichtung verläuft entgegen der natürlichen Strömungsrichtung und bringt somit die obenliegenden, am stärksten durch Verlustwärme beaufschlagten Wandbereiche zuerst mit der kühleren Luft aus der Umgebung der Schaltanlage in Berührung.

Für die Unterbringung des Lüfters, der beispielsweise ein handelsüblicher elektromotorisch betriebener Querstrom-oder Walzenlüfter sein kann, bestehen mehrere Möglichkeiten, von denen mehrere kurz erläutert werden sollen. Insbesondere kann an der Oberseite des Schaltfeldes eine Nische zur Aufnahme des Lüfters vorgesehen sein und die erste Mündung des Luftkanals kann an die Nische anschließend sowie gegenüber der Oberseite des Schaltfeldes zurückgesetzt angeordnet sein. Ferner kann der Lüfter ein eigenes Gehäuse aufweisen, das bündig mit der Oberseite des Schaltfeldes oder über die Oberseite überragend montierbar ist. In jedem Fall wird der Vorteil erzielt, daß sich der Lüfter nicht im Inneren des Schaltfeldes befindet und daher ohne Stillsetzung bzw. Abschaltung der Schaltanlage auswechselbar ist. Dabei wird davon ausgegangen, daß während der relativ kurzen Zeitspanne, die das Auswechseln des Lüfters erfordert, keine unzulässige Erwärmung der Geräteeinheit für Hilfsstromkreise eintreten wird, da noch eine gewisse, wenngleich verminderte, Kühlwirkung durch natürliche Durchströmung des Luftkanals besteht.

Unabhängig davon, ob der Luftkanal für natürliche Durchströmung oder für den Betrieb mit einem Lüfter eingerichtet ist, kann es vorteilhaft sein, wenigstens eine Wand des Luftkanals zwecks Vergrößerung der Oberfläche mit Kühlrippen zu versehen.

Der Luftkanal kann durch Verbindung der ihn begrenzenden Wände als vorgefertigte und in dem Schaltfeld montierbare Baugruppe ausgebildet sein. Dabei kann eine zur Aufnahme des Lüfters dienende Nische in die Baugruppe einbezogen sein, etwa so, daß die Nische mit der Oberseite des Schaltfeldes abschließt oder über die Oberseite ganz oder teilweise übersteht.

Besonders für Schaltanlagen, die mehrere nebeneinander aufgestellte Schaltfelder umfaßt, eignet sich eine Ausführungsform der Erfindung, bei der die an der Oberseite des Schaltfeldes gelegene Mündung mit einem ggfs. für mehrere Schaltfelder gemeinsamen Zuführkanal korrespondiert, wobei an wenigstens einem Ende des Zuführkanals ein Lüfter angeordnet ist.

Ist infolge der Anzahl von Schaltfeldern der Luftbedarf für die Kühlung groß, so kann es sich empfehlen, anstelle eines einzigen, für den gesamten Bedarf an Kühlluft bemessenen Lüfters an beiden Enden des Zuführkanals einen Lüfter mit der halben geforderten Gesamtleistung zu montieren. Ist dagegen der Gesichtspunkt der Betriebssicherheit überwiegend, so können die beiden Lüfter jeweils für die Gesamtleistung bemessen sein, wobei durch je einen den Lüftern zugeordneten Verschlußschieber wahlweise der eine oder der andere der beiden Lüfter wirksam zu machen ist.

Die Erfindung wird im folgenden anhand der in den Figuren dargestellten Ausführungsbeispiele näher erläutert.

Die Figur 1 zeigt ein Schaltfeld einer Niederspannungs-Schaltanlage von vorn, während die Figur 2 das Schaltfeld schematisch im Schnitt zeigt.

Die Figuren 3, 4 und 5 zeigen jeweils als Einzelheit abgewandelte Ausführungsformen eines Luftkanals und der Einbauart eines Lüfters in schematisch vereinfachter Darstellung.

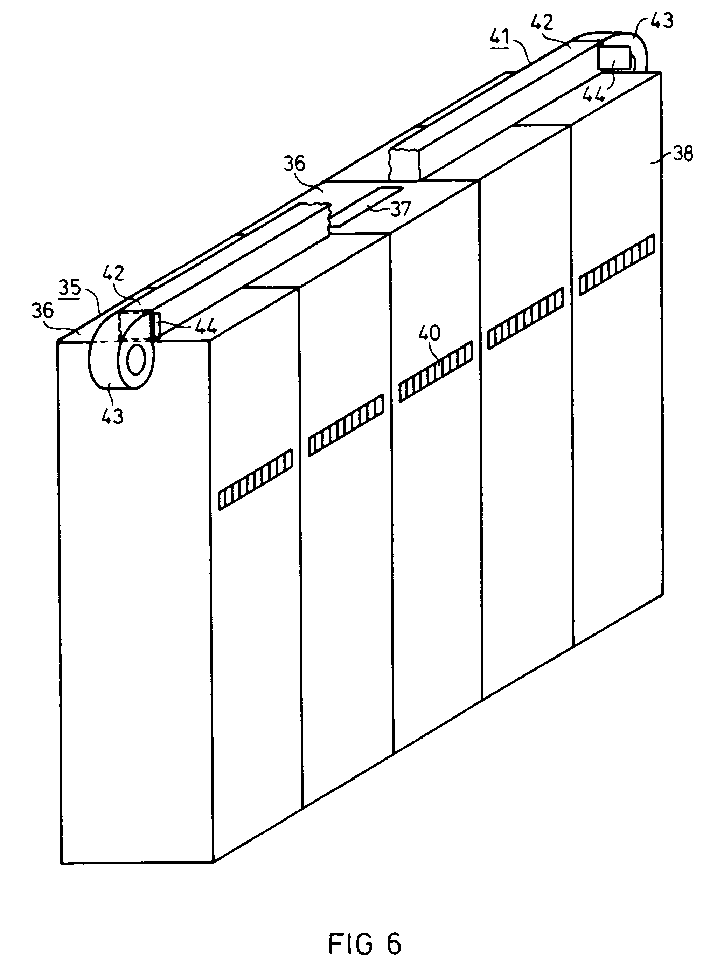

Eine aus mehreren Schaltfeldern bestehende Schaltanlage mit einem gemeinsamen Zuführkanal für Kühlluft ist vereinfacht perspektivisch in der Figur 6 dargestellt.

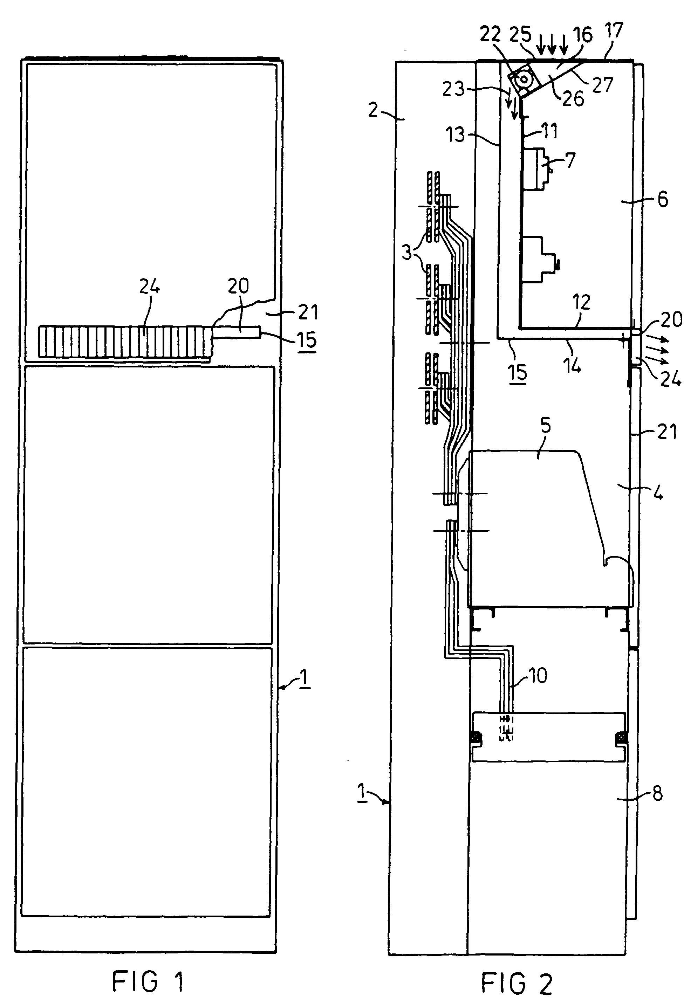

Das Schaltfeld 1 gemäß den Figuren 1 und 2 weist einen rückwärtigen Sammelschienenraum 2 mit Sammelschienen 3 (Figur 2) und einen Geräteraum 4 auf, der eine als Leistungsschalter ausgebildete erste Geräteeinheit 5 für Hauptstromkreise enthält. Oberhalb des Geräteraumes 4 befindet sich ein Hilfsgeräteraum 6, der wenigstens eine zweite Geräteeinheit 7 für Hilfsstromkreise enthält. Es kann sich dabei z. B. um elektronische Anzeige-, Meß- und Steuergeräte handeln, die relativ wärmeempfindlich sind. Unterhalb des Geräteraumes 4 befindet sich in dem Schaltfeld 1 ein Kabelanschlußraum 8, in den über einen nicht gezeigten Kabelkanal herangeführte Kabel mit Abgangsschienen 10 der Geräteeinheit 4 verbunden werden können.

Der obere Hilfsgeräteraum 5 ist somit der Verlustwärme ausgesetzt, die von Sammelschienen 3 und von der ersten Geräteeinheit 5 abgegeben wird. Durch eine besondere Wandanordnung wird der Hilfsgeräteraum 6 gegen eine zu starke Wärmeeinwirkung geschützt. Hierzu sind parallel zu Wänden 11 und 12, welche den Hilfsgeräteraum 6 an dessen Rückseite bzw. nach unten begrenzen, weitere Wände 13 und 14 angeordnet. Hierdurch wird ein Luftkanal 15 gebildet, der eine erste Mündung 16 an der Oberseite 17 des Schaltfeldes 1 und eine weitere Mündung 20 an der Frontseite 21 des Schaltfeldes 1 besitzt.

Wie die Figuren 1 und 2 zeigen, erstrecken sich die Wände 11 und 12 sowie 13 und 14 paarweise parallel zueinander über die gesamte Breite des Schaltfeldes 1. Dementsprechend hat auch der winkelförmige Luftkanal im wesentlichen die Breite des Schaltfeldes, wodurch der Hilfsgeräteraum nach hinten und unten abgeschirmt ist. Durch einen Lüfter 22 wird Luft an der Oberseite 17 des Schaltfeldes 1 angesaugt und in Richtung des Pfeiles 23 zur frontseitigen Mündung 20 des Luftkanals 15 gefördert, wo ein Austrittsgitter 24 angebracht ist. Es genügt bei dieser Anordnung ein verhältnismäßig geringer Querschnitt des Luftkanals 15 mit entsprechend kleinem Abstand der Wände 11 und 13 sowie 12 und 14 voneinander.

Der Lüfter 22 ist nach Abnahme einer an der Oberseite 17 des Schaltfeldes 1 vorgesehenen Abdeckung 25 in einer Nische 26 zugänglich, die durch ein winklig zur Oberseite 17 montiertes und den Hilfsgeräteraum 6 begrenzendes Tragblech 27 nach unten gebildet ist. Daher kann der Lüfter 22 ausgewechselt werden, ohne den Geräteraum 4 oder den Hilfsgeräteraum 6 zu öffnen.

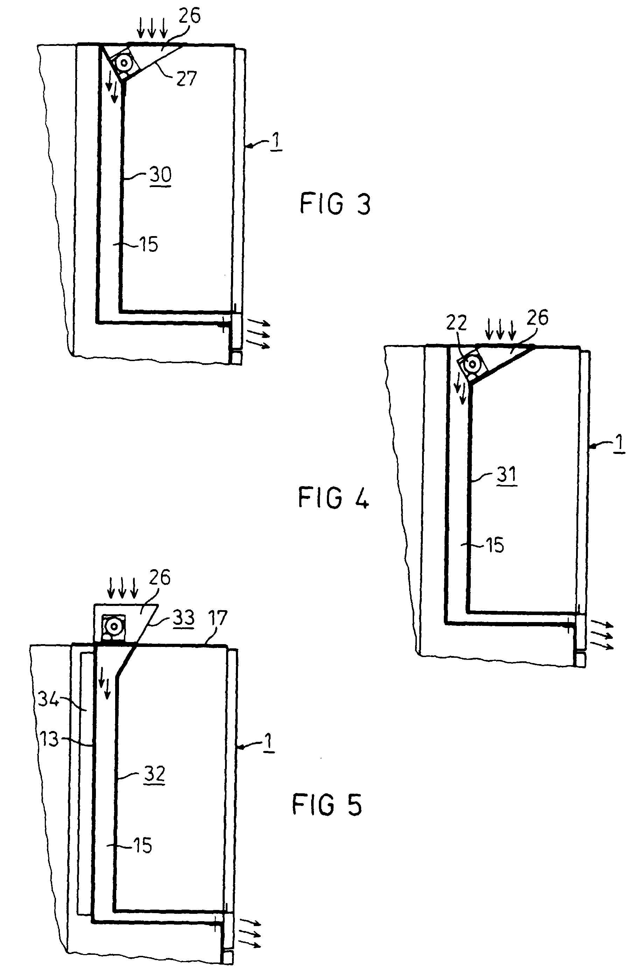

In den Figuren 3, 4 und 5 ist nur der obere Bereich des Schaltfeldes gezeigt, um unterschiedliche Ausführungen des Luftkanals 15 zu veranschaulichen.

In dem Beispiel gemäß der Figur 3 ist das Tragblech 27 fester Bestandteil des Schaltfeldes 1, während der Luftkanal 15 durch eine vorgefertigte Baugruppe 30 gebildet ist, die nachträglich in das Schaltfeld 1 eingefügt ist. Zur Hervorhebung ist die Baugruppe 30 mit größerer Strichstärke dargestellt. Das weitere Ausführungsbeispiel gemäß der Figur 4 läßt erkennen, daß der Luftkanal 15 und die Nische 26 gemeinsam als vorgefertigte Baugruppe 31 hergestellt sind. Diese kann auch den Lüfter 22 umfassen.

Als weiteres Ausführungsbeispiel zeigt die Figur 5, daß der Luftkanal 15 und die Nische 26 durch gesonderte Baugruppen 32 und 33 gebildet sein können, wobei die Baugruppe 32 bis zur Oberseite 17 des Schaltfeldes 1 reicht und die Baugruppe 33 bündig an den Luftkanal 15 anschließend auf die Oberseite 17 aufgesetzt ist. Die Wand 13 der Baugruppe 33 ist mit Kühlrippen 34 versehen, um durch Vergrößerung der Oberfläche die Kühlwirkung zu steigern. Diese Maßnahme ist auch unabhängig von der Einbeziehung der Wand 13 in die Baugruppe 32 bei allen anderen beschriebenen Ausführungsbeispielen anwendbar und kann auch wahlweise bei den anderen Wänden getroffen werden, die den Luftkanal 15 begrenzen.

In der Figur 6 ist schematisch ein besonders für Schaltanlagen mit mehreren Schaltfeldern geeignetes Ausführungsbeispiel gezeigt. Insgesamt sind fünf Schaltfelder 35 nebeneinander aufgestellt, die an ihrer Oberseite 36 eine erste Mündung 37 und an ihrer Frontseite 38 eine zweite Mündung 40 besitzen. Über die Oberseiten 36 aller Schaltfelder 35 erstreckt sich ein Zuführkanal 41 für Kühlluft, der im Bereich des mittleren Schaltfeldes 35 abgebrochen gezeigt ist, um eine der Mündungen 37 sichtbar zu machen. An beiden Enden 42 des Zuführkanals 41 ist je ein elektromotorisch betriebener Lüfter 43 angeordnet, der beispielsweise ein Radiallüfter sein kann. Je nach der Bemessung dieser Lüfter 43 erfolgt die Kühlung durch einen oder beide Lüfter. Aus Gründen der Betriebssicherheit kann es sich empfehlen, jeweils einen Lüfter als Reserve vorzusehen. Durch einen Verschlußschieber 44 an jedem Ende des Zuführkanals 41 ist es dann möglich, die Gesamtanlage durch den linken oder den rechten Lüfter 43 zu kühlen. Im Schadensfall kann der betreffende Lüfter bei geschlossenem Verschlußschieber 44 ausgewechselt werden, ohne die Schaltanlage stillsetzen zu müssen.

## Patentansprüche

1. Schaltfeld (1) einer Schaltanlage mit wenigstens einer ersten, für Hauptstromkreise vorgesehenen Geräteeinheit (5) und mit wenigstens einer weiteren, für Hilfsstromkreise vorgesehenen Geräteeinheit (7), wobei die weitere Geräteeinheit (7) durch Wände (11, 12) gegenüber der ersten Geräteeinheit (5) angetrennt ist,
**dadurch gekennzeichnet**, daß im Abstand zu den abtrennenden Wänden (11, 12) jeweils eine zusätzliche Wand (13, 14) zur Bildung eines Luftkanals (15) angeordnet ist.

2. Schaltfeld nach Anspruch 1,
**dadurch gekennzeichnet**, daß die zusätzlichen Wände (13, 14) etwa die Fläche der abtrennenden Wände (11, 12) aufweisen und daß der Luftkanal (15) etwa die Breite des Schaltfeldes (1) besitzt.

3. Schaltfeld nach Anspruch 1 oder 2,
**dadurch gekennzeichnet**, daß bei einer Anordnung der ersten Geräteeinheit (5) unterhalb der zweiten Geräteeinheit (7) der Luftkanal (15) etwa winkelförmig die Unterseite und die Rückseite der zweiten Geräteeinheit (7) abschirmend ausgebildet ist.

4. Schaltfeld nach Anspruch 3,
**dadurch gekennzeichnet**, daß der Luftkanal (15) eine erste, an der Oberseite (17) des Schaltfeldes (1) gelegene Mündung (16) und eine weitere, an der Frontseite (21) des Schaltfeldes (1) gelegene Mündung (20) besitzt.

5. Schaltfeld nach Anspruch 4,
**dadurch gekennzeichnet**, daß im Bereich der ersten Mündung (16) ein Lüfter (22) angeordnet ist, der Kühlluft in Richtung (23) der zweiten Mündung (20) fördert.

6. Schaltfeld nach Anspruch 5,
**dadurch gekennzeichnet,** daß an der Oberseite (17) des Schaltfeldes (1) eine Nische (26) zur Aufnahme des Lüfters (22) vorgesehen ist und daß die erste Mündung (16) des Luftkanals (15) an die Nische (26) anschließend sowie gegenüber der Oberseite (17) des Schaltfeldes (1) zurückgesetzt angeordnet ist.

7. Schaltfeld nach einem der vorangehenden Ansprüche,
**dadurch gekennzeichnet,** daß
wenigstens eine Wand (13) des Luftkanals (15) mit Kühlrippen (34) versehen ist.

8. Schaltfeld nach einem der vorangehenden Ansprüche,
**dadurch gekennzeichnet,** daß der Luftkanal (15) durch Verbindung der ihn begrenzenden Wände (11, 12, 13, 14) als vorgefertige und in dem Schaltfeld (1) montierbare Baugruppe (30, 31, 32) ausgebildet ist.

9. Schaltfeld nach Anspruch 8,
**dadurch gekennzeichnet,** daß eine zur Aufnahme eines Lüfters (22) dienende Nische (26) in die Baugruppe (31) einbezogen ist.

10. Schaltfeld nach Anspruch 5,
**dadurch gekennzeichnet,** daß die an der Oberseite (36) des Schaltfeldes (35) gelegene Mündung (37) mit einem für ggfs. mehrere nebeneinander aufgestellte Schaltfelder (35) gemeinsamen Zuführkanal (41) korresponund daß an wenigstens einem Ende des Zuführkanals (41) ein Lüfter (43) angeordnet ist.

11. Schaltfeld nach Anspruch 10,
**dadurch gekennzeichnet,** daß an beiden Enden (42) des Zuführkanals (41) ein Lüfter (43) angeordnet ist und daß durch je einen den Lüftern (43) zugeordneten Verschlußschieber (44) wahlweise der eine oder der andere der beiden Lüfter (43) wirksam zu machen ist.

## Claims

1. Switchpanel (1) of a switchgear, having at least one first device unit (5) provided for main circuits, and having at least one further device unit (7) provided for auxiliary circuits, with the further device unit (7) being separated with respect to the first device unit (5) by walls (11, 12), characterised in that arranged at a distance from the separating walls (11, 12) is a respective additional wall (13, 14) for forming an air duct (15).

2. Switchpanel according to claim 1,
characterised in that the additional walls (13, 14) have approximately the area of the separating walls (11, 12), and in that the air duct (15) has approximately the width of the switchpanel (1).

3. Switchpanel according to claim 1 or 2,
characterised in that in the case of an arrangement of the first device unit (5) beneath the second device unit (7), the air duct (15) is constructed so as to be substantially angular, screening the underside and the rear side of the second device unit (7).

4. Switchpanel according to claim 3,
characterised in that the air duct (15) has a first opening (16), which is placed on the upper side (17) of the switchpanel (1), and a further opening (20), which is placed on the front side (21) of the switchpanel (1).

5. Switchpanel according to claim 4,
characterised in that arranged in the region of the first opening (16) is a fan (22), which conveys the cooling air in the direction (23) of the second opening (20).

6. Switchpanel according to claim 5,
characterised in that provided on the upper side (17) of the switchpanel (1) is a recess (26) for accommodating the fan (22), and in that the first opening (16) of the air duct (15) is arranged joining onto the recess (26) and also set back with respect to the upper side (17) of the switchpanel (1).

7. Switchpanel according to one of the preceding claims, characterised in that at least one wall (13) of the air duct (15) is provided with cooling ribs (34).

8. Switchpanel according to one of the preceding claims, characterised in that by connection of the walls (11, 12, 13, 14) which delimit it, the air duct (15) is constructed as a prefabricated module (30, 31, 32) which can be mounted in the switchpanel (1).

9. Switchpanel according to claim 8,
characterised in that a recess (26) which is used to accommodate a fan (22) is included in the module (31).

10. Switchpanel according to claim 5,
characterised in that the opening (37) placed on the upper side (36) of the switchpanel (35) corresponds to a supply channel (41) which, if appropriate, is common to several switchpanels (35) which are installed next to each other, and in that a fan (43) is arranged on at least one end of the supply channel (41).

11. Switchpanel according to claim 10,
characterised in that there is arranged at both ends (42) of the supply channel (41) a fan (43), and in that optionally either one or other of the two fans (43) is to be made active by means of a shutter (44) allocated to each of the fans (43).

## Revendications

1. Tableau de distribution (1) d'une installation de distribution, comportant au moins une première unité (5) d'appareils prévue pour des circuits électriques principaux, et au moins une autre unité (7) d'appareils destinée à des circuits électriques auxiliaires, l'autre unité (7) d'appareils étant séparée de la première unité (5) d'appareils par des cloisons (11, 12),
caractérisé par le fait qu'une cloison supplémentaire (13, 14), qui est destinée à former un canal d'aération (15), est disposée à une certaine distance des cloisons de séparation (11, 12).

2. Tableau de distribution selon la revendication 1,
caractérisé par le fait que les cloisons supplémentaires (13, 14) ont approximativement la même surface que les cloisons de séparation (11, 12), et que la largeur du canal d'aération (15) est approximativement égale à celle du tableau de distribution (1).

3. Tableau de distribution selon la revendication 1 ou 2,
caractérisé par le fait que, lorsque la première unité (5) d'appareils est disposée au-dessous de la deuxième unité (7) d'appareils, le canal d'aération (15) est réalisé avec une forme angulaire qui protège le côté inférieur et la face arrière de la deuxième unité (7) d'appareils.

4. Tableau de distribution selon la revendication 3,
caractérisé par le fait que le canal d'aération (15) comporte un premier orifice (16) situé du côté supérieur (17) du tableau de distribution (1), et un autre orifice (20) situé en face frontale (21) du tableau de distribution (1).

5. Tableau de distribution selon la revendication 4,
caractérisé par le fait qu'un ventilateur (22) , qui envoie de l'air de refroidissement en direction (23) du deuxième orifice (20), est disposé dans la zone du premier orifice (16).

6. Tableau de distribution selon la revendication 5,
caractérisé par le fait qu'une niche (26) destinée à recevoir le ventilateur (22) est prévue du côté supérieur (17) du tableau de distribution (1), et que le premier orifice (16) du canal d'aération (15) est disposé de façon à se raccorder à la niche (26) et en retrait par rapport au côté supérieur (17) du tableau de distribution (1).

7. Tableau de distribution selon l'une quelconque des revendications précédentes,
caractérisé par le fait que l'une au moins des cloisons (13) du canal d'aération (15) comporte des ailettes de refroidissement (34).

8. Tableau de distribution selon l'une quelconque des revendications précédentes,
caractérisé par le fait que, grâce à la liaison des cloisons (11, 12, 13, 14) le délimitant, le canal d'aération (15) est réalisé sous la forme de modules préfabriqués (30, 31, 32) pouvant être montés dans le tableau de distribution (1).

9. Tableau de distribution selon la revendication 8,
caractérisé par le fait qu'une niche (26) servant à la réception d'un ventilateur (22) est intégrée au module (31).

10. Tableau de distribution selon la revendication 5,
caractérisé par le fait que l'orifice (37) situé du côté supérieur (36) du tableau de distribution (35) communique avec un canal d'amenée (41), qui est commun pour plusieurs tableaux de distribution (35) disposés le cas échéant côte-à-côte, et qu'un ventilateur (43) est disposé à une extrémité au moins du canal d'amenée (41).

11. Tableau de distribution selon la revendication 10,
caractérisé par le fait qu'un ventilateur (43) est disposé aux deux extrémités (42) du canal d'amenée (41), et que l'un ou l'autre des deux ventilateurs (43) peut, au choix, être mis en action par un coulisseau de fermeture (44) associé à chacun des ventilateurs (43).
